# EUROPÄISCHE PATENTSCHRIFT

(11) **EP 3 560 313 B1**
(45) Veröffentlichungstag und Bekanntmachung des Hinweises auf die Patenterteilung: **17.11.2021**
(21) Anmeldenummer: 18169970.3
(22) Anmeldetag: 27.04.2018
(51) Int. Cl.: A01D 34/416, A01D 34/73

(54) **ANORDNUNG ZUR BEFESTIGUNG EINES SCHNEIDKOPFES SOWIE TRAGBARES ARBEITSGERÄT MIT EINER ANORDNUNG ZUR BEFESTIGUNG EINES SCHNEIDKOPFES**
ARRANGEMENT FOR FIXING A CUTTING HEAD AND PORTABLE TOOL WITH AN ARRANGEMENT FOR FIXING A CUTTING HEAD
DISPOSITIF DE FIXATION D'UNE TÊTE DE COUPE ET APPAREIL DE TRAVAIL PORTATIF DOTÉ D'UN DISPOSITIF DE FIXATION D'UNE TÊTE DE COUPE

(43) Veröffentlichungstag der Anmeldung: 30.10.2019
(73) Patentinhaber: Andreas Stihl AG & Co. KG, 71336 Waiblingen (DE)
(72) Erfinder: Rethaber, Achim, 70736 Fellbach (DE)
(74) Vertreter: Wasmuth, Rolf

(56) Entgegenhaltungen:
- EP-A1- 2 747 542
- WO-A2-2008/053508
- US-A1- 2018 098 492

## Beschreibung

Die Erfindung betrifft eine Anordnung der im Oberbegriff des Anspruchs 1 angegebenen Gattung. Weiter betrifft die Erfindung ein tragbares Arbeitsgerät mit einer Anordnung.

Es sind Freischneider bekannt, an deren Abtriebswelle ein Schneidkopf mit einem Schneidwerkzeug angeordnet ist. Der Schneidkopf ist auf der Abtriebswelle über eine Pressverbindung montiert. Nachteilig an derartigen Freischneidern ist, dass es dem Endverbraucher nur schwer möglich ist, den Schneidkopf des Freischneiders selbst zu wechseln. Für die Demontage und Montage des Schneidkopfes benötigt der Endverbraucher Spezialwerkzeug, um die Pressverbindung zu lösen bzw. anschließend den neuen Schneidkopf wieder mittels einer Pressverbindung auf der Abtriebswelle zu montieren. Alternativ kann der Endverbraucher den Freischneider in eine entsprechende Fachwerkstatt bringen, welche den Schneidkopfwechsel durchführt.

Aus der US 2018/098492 A1 ist ein Freischneider mit einer Fadenspule bekannt, dessen Schneidkopf auf eine Abtriebswelle aufgeschoben und mittels einer Mutter auf der Abtriebswelle befestigt ist. Die Befestigung und das Lösen der Mutter sind umständlich, da hierfür der Schneidkopf zerlegt werden muss.

Aus der EP 2 747 542 A1 ist ein Freischneider mit einem Schneidkopf und einer Haube bekannt, wobei die Haube über den Schneidkopf reibkraftschlüssig auf der Abtriebswelle gehalten ist.

Der Erfindung liegt die Aufgabe zugrunde, eine Anordnung zu schaffen, die eine einfache, schnelle und werkzeuglose Montage sowie Demontage des Schneidkopfes vom Arbeitsgerät ermöglicht.

Diese Aufgabe wird durch eine Anordnung mit den Merkmalen des Anspruchs 1 gelöst.

Der Erfindung liegt des Weiteren die Aufgabe zugrunde, ein tragbares Arbeitsgerät mit einer Anordnung zu schaffen, das eine einfache, schnelle und werkzeuglose Montage sowie Demontage des Schneidkopfes vom Arbeitsgerät ermöglicht.

Diese Aufgabe wird durch ein Arbeitsgerät mit den Merkmalen des Anspruchs 14 gelöst.

Es ist vorgesehen, dass die Anordnung zur Befestigung eines Schneidkopfes an einer Abtriebswelle des motorisch angetriebenen Arbeitsgerätes eine Abtriebswelle, einen Schneidkopf und zumindest ein am Schneidkopf angeordnetes Schneidwerkzeug umfasst. Der Schneidkopf ist mittels eines an dem Schneidkopf drehfest gehaltenen Schraubelementes auf der Abtriebswelle montiert und insbesondere reibkraftschlüssig auf der Abtriebswelle gehalten. Zur Montage wird der Schneidkopf samt drehfest darin eingesetztem Schraubelement in einer Montagedrehrichtung auf die Abtriebswelle gedreht. Die Anordnung umfasst zusätzlich eine Haube. Die Haube unterteilt sich in radialer Richtung ausgehend von der Drehachse in einen Innenbereich und einen an den Innenbereich anschließenden Außenbereich. Demnach ist der Abstand des Außenbereichs zur Drehachse größer als der Abstand des Innenbereichs zur Drehachse. Eine radial zur Drehachse gemessene Breite des Innenbereichs entspricht mindestens dem 3fachen einer radial zur Drehachse gemessenen Breite des Außenbereichs. Die Haube ist unmittelbar auf der Abtriebswelle drehfest gehalten. Die Haube ist gegen Verdrehung formschlüssig, geklebt oder gepresst auf der Abtriebswelle gehalten. Die Haube weist im Innenbereich Rippen und im Außenbereich eine erste Grifffläche auf.

Zur Demontage des Schneidkopfes ist der Schneidkopf von der Abtriebswelle zu schrauben. Damit sich die Abtriebswelle nicht mitdreht und somit das Lösen des Schneidkopfes verhindert, ist die Abtriebswelle festzuhalten. Der Zugang zur Abtriebswelle ist jedoch durch den Schneidkopf, die Haube oder auch durch das vordere Gehäuse des Arbeitsgerätes versperrt, so dass die Abtriebswelle nicht unmittelbar festgehalten werden kann. Die Haube ist auf der Abtriebswelle gelagert. Die Haube ist auf der Abtriebswelle gegen Verdrehung formschlüssig gehalten. Zudem ist eine Relativdrehung zwischen der Haube und dem Schneidkopf möglich. Somit kann die Abtriebswelle mittelbar über die Haube gegen Verdrehung festgehalten werden, während der Schneidkopf von der Abtriebswelle gelöst wird.

Zudem ist eine erste Grifffläche an der Haube vorgesehen. Die erste Grifffläche ist im Außenbereich der Haube angeordnet und ist somit gut zugänglich. Die Haube weist vorzugsweise eine dem Schneidkopf zugewandte Innenseite und eine dem Schneidkopf abgewandte Außenseite auf. Die erste Grifffläche ist bevorzugt im Außenbereich an der Außenseite der Haube ausgebildet. Der Bediener muss zur Demontage bzw. zur Montage des Schneidkopfes die Haube mit der einen Hand an der ersten Grifffläche festhalten und den Schneidkopf mit seiner anderen Hand von der Abtriebswelle drehen. Dadurch kann der Bediener den Schneidkopf von Hand lösen oder auf der Abtriebswelle befestigen, ohne dafür Werkzeug zu benötigen. Montage und Demontage der Abtriebswelle erfolgen werkzeuglos.

Die Rippen an der Haube erhöhen die Steifigkeit der Haube, so dass die vom Bediener ausgeübte Haltekraft ausgehend von der ersten Grifffläche auch über die Rippen auf die Abtriebswelle übertragen werden kann. Zudem kann eine Verformung der Haube beim Festhalten im Wesentlichen vermieden werden.

Die Haube ist vorzugsweise topfförmig ausgebildet. Die Haube weist vorzugsweise eine Innenseite auf, wobei die Innenseite einen Innenraum begrenzt. Vorteilhaft ist der Schneidkopf mindestens teilweise in dem Innenraum aufgenommen. Durch die topfförmige Ausbildung der Haube ist diese entlang ihres Umfangs sowie in ihrer axialen Richtung begrenzt. Die die Haube begrenzende Kontur kann geradlinig und/oder gekrümmt verlaufen. Im Konturverlauf können auch Unterbrechungen vorhanden sein. Der Innenbereich und der Außenbereich der Haube treffen vorteilhaft an der radialen Begrenzung des Innenraums aufeinander.

Die Haube umfasst einen von der Drehachse sich in radialer Richtung erstreckenden Haubenboden und eine an den Haubenboden anschließende Haubenwand. Der Außenbereich entspricht vorteilhaft der Haubenwand. Die Haubenwand erstreckt sich im Wesentlichen in Richtung der Drehachse. Der Außendurchmesser der Haubenwand kann jedoch entlang der Drehachse variieren. Demnach ist die Haubenwand nicht auf eine zylindrische Kontur festgelegt, sondern kann insbesondere auch einen gekrümmten Verlauf aufweisen. Die Haubenwand besitzt eine Dicke, die dem in radialer Richtung zur Drehachse gemessenen Abstand zwischen der Außenseite und der Innenseite der Haube entspricht. Die Dicke der Haubenwand ist insbesondere kleiner als 5% des maximalen Durchmessers der Haube. Die Haube weist demnach eine geringe Wandstärke in Bezug auf ihre Erstreckung auf. Die Haube kann unmittelbar benachbart zur Abtriebswelle eine größere Dicke aufweisen. Durch die topfförmige Ausgestaltung der Haube kann der Schneidkopf mindestens teilweise in der Haube angeordnet werden. Dadurch wird der Schneidkopf von der Haube teilweise umhüllt. Vorteilhaft bildet die Innenseite der Haube zur Außenseite des Schneidkopfes eine Gegenkontur, so dass die Haube den Schneidkopf eng umschließt.

Die Rippen sind vorzugsweise lediglich an der Außenseite der Haube ausgebildet. Dadurch kann der Schneidkopf näher am Haubenboden positioniert und eine kompaktere Anordnung aus Haube und Schneidkopf ermöglicht werden.

Die Haube weist vorzugsweise an ihrer Innenseite eine Anlagefläche auf, über welche die Haube auf der Abtriebswelle verspannt ist. Der Schneidkopf ist bevorzugt flächig gegen die Anlagefläche der Haube gespannt. Dadurch wird die Haube durch den Schneidkopf auf der Abtriebswelle in axialer Richtung der Drehachse verspannt und befestigt. Vorteilhaft ist die Anlagefläche an der Innenseite des Haubenbodens im Innenbereich der Haube ausgebildet. Die Haube weist eine in Richtung der Drehachse gemessene Länge auf, wobei die Anlagefläche vorzugsweise etwa auf halber Länge der Haube angeordnet ist. Insbesondere durch die Ausbildung der Anlagefläche nahe der Abtriebswelle wird ein kurzer und direkter Kraftfluss zwischen Abtriebswelle, Schneidkopf und Haube gewährleistet. Der geschlossene Kraftfluss verläuft ausgehend von der Abtriebswelle über das Schraubelement in den Schneidkopf, über die Anlagefläche zur Haube, über ein Stützlager und über eine Wellenschulter wieder zurück in die Abtriebswelle.

In montiertem Zustand des Schneidkopfes sind die Haube und der Schneidkopf in Richtung der Drehachse über die Anlagefläche miteinander verspannt. Demnach sind die Haube und der Schneidkopf in Umfangsrichtung lediglich reibkraftschlüssig miteinander verbunden. Beim Lösen des Schneidkopfes können sich die Haube und der Schneidkopf in Umfangsrichtung zur Drehachse relativ zueinander drehen. So kann der Schneidkopf bei festgehaltener Haube von der Abtriebswelle gelöst und auf dieser verspannt werden.

Die Innenseite der Haube und der Schneidkopf, insbesondere die Außenseite des Schneidkopfes, kontaktieren sich vorzugsweise in einer Dichtfläche dichtend. Die Dichtfläche hat vorzugsweise einen Abstand zur Drehachse, der mindestens einem Viertel des Außendurchmessers der Haube entspricht. Durch die Dichtfläche zwischen Haube und Schneidkopf wird vermieden, dass im Betrieb des Arbeitsgerätes Schmutz zwischen Schneidkopf und Haube gelangt. Dadurch bleibt insbesondere die Anlagefläche zum Verspannen der Haube und des Schneidkopfes frei von Schmutz, so dass eine sichere Übertragung der Spannkräfte gewährleistet werden kann.

Die Haube ist bevorzugt als Lüfterrad ausgebildet. Das Lüfterrad kann zur Kühlung des Motors des Arbeitsgerätes eingesetzt werden. Die Haube kann vorteilhaft auch als Gebläserad zur Erzeugung eines Luftstromes gegen Verschmutzung des vorderen Gehäuses verwendet werden. So wird durch das Gebläserad zwischen dem vorderen Gehäuse und dem Schneidkopf Luft ausgeblasen und ein Eindringen von Schmutz in den Getriebeinnenraum vermieden. Die beispielsweise bei einem Freischneider aufwärts gewirbelten Gräser werden, noch bevor diese das vordere Gehäuse erreichen, durch den Luftstrom des Gebläserads radial nach außen geblasen. Vorzugsweise sind zwei definierte Stellen vorgesehen, an denen die Luft vom Gebläserad in Richtung eines Schutzes bläst. Der Schutz ist Bestandteil des vorderen Gehäuses. Dadurch bleibt das vordere Gehäuse frei von Verschmutzung.

Es ist vorteilhaft vorgesehen, dass die Haube eine Nabe umfasst, welche drehfest an der Haube angeordnet ist, wobei die Nabe eine formschlüssige Verbindung zwischen der Haube und der Abtriebswelle herstellt. Durch die separate Ausbildung der Nabe kann diese gegenüber der Haube aus einem anderen Werkstoff, insbesondere einem Werkstoff mit höherer Festigkeit sowie geringerem Verschleiß, insbesondere einer Metalllegierung, ausgebildet sein. Dadurch können vergleichsweise hohe Antriebsmomente von der Abtriebswelle auf die Haube übertragen werden, ohne die Haube zu beschädigen. Die Haube selbst wiederum kann aus weniger festem, dafür aber leichterem Material zur Gewichtsersparnis bestehen. Die Haube ist auf der Nabe drehfest angeordnet, und die Nabe ist formschlüssig mit der Abtriebswelle verbunden. Daher kann die Abtriebswelle mittels der Haube über die Nabe in Umfangsrichtung der Drehachse festgehalten werden.

Die erste Grifffläche der Haube überlappt vorzugsweise den Schneidkopf in Richtung der Drehachse. Bevorzugt überlappt die erste Grifffläche in ihrer in Richtung der Drehachse gemessenen gesamten Länge den Schneidkopf in Richtung der Drehachse. Dadurch wird die erste Grifffläche der Haube für den Bediener besser zugänglich. Der Bediener kann die Haube besser greifen und das zum Lösen oder Spannen des Schneidkopfes notwendige Gegenmoment an der Haube von Hand einfacher aufbringen. Dadurch, dass die vorhandene Bauhöhe des Schneidkopfes für die Bereitstellung der Grifffläche genutzt wird, erhöht sich die Bauhöhe aufgrund der Grifffläche nicht oder nur geringfügig. Dadurch, dass die Grifffläche den Schneidkopf axial überdeckt, ist die Grifffläche auch dann frei zugänglich, wenn der Schneidkopf und das vordere Gehäuse in axialer Richtung unmittelbar aneinander anschließen.

Die Haube weist vorzugsweise entlang der ersten Grifffläche ausgehend von der Drehachse in radialer Richtung Spiel zum Schneidkopf auf. Durch das Spiel wird beim Halten der Haube an der ersten Grifffläche und gegebenenfalls sogar bei leichtem Eindrücken der ersten Grifffläche in Richtung Schneidkopf vermieden, dass die Haube den Schneidkopf kontaktiert. Der Kontakt zwischen der Haube an der ersten Grifffläche und dem Schneidkopf hätte zur Folge, dass über die Haube auch der Schneidkopf festgehalten würde. Somit wäre das gegenseitige Verdrehen von Haube und Schneidkopf erschwert. Durch das Spiel zwischen Haube und Schneidkopf kann gewährleistet werden, dass sich die Haube an der ersten Grifffläche und der Schneidkopf nicht gegenseitig bei der Montage oder der Demontage hemmen.

Die erste Grifffläche der Haube und eine zweite am Schneidkopf ausgebildete Grifffläche sind vorzugsweise frei zugänglich. Demnach kann der Bediener bei der Montage oder Demontage des Schneidkopfes mit seiner einen Hand den Schneidkopf an der zweiten Grifffläche und mit seiner anderen Hand die Haube an der ersten Grifffläche auf einfache Weise festhalten und gegeneinander verdrehen. Durch die gute Zugänglichkeit kann der Schneidkopf unter Festhalten der Haube von Hand ohne Einsatz weiterer Werkzeuge von der Abtriebswelle geschraubt und demontiert werden.

Das tragbare Arbeitsgerät umfasst die erfindungsgemäße Anordnung und ein vorderes Gehäuse. Es ist vorgesehen, dass die Haube mit ihrem Außenbereich, vorteilhaft vollständig, aus dem vorderen Gehäuse ragt. Dadurch wird gewährleistet, dass die im Außenbereich befindliche Grifffläche frei zugänglich ist und nicht durch das vordere Gehäuse verdeckt ist. Folglich kann der Bediener die Haube von Hand greifen. Die im Innenbereich angeordneten Rippen liegen vorteilhaft in axialer Überdeckung mit dem vorderen Gehäuse. Vorteilhaft überragt das vordere Gehäuse die Rippen der Haube in Richtung der Drehachse, insbesondere vollständig. Dadurch verringert sich der Spalt zwischen vorderem Gehäuse und der Haube. Der Getriebeinnenraum ist gegenüber Verschmutzung geschützt. Zudem werden durch die Überdeckung der Rippen die Lüfterleistung und damit die Kühlleistung erhöht.

Vorteilhaft sind sowohl die Grifffläche als auch die Rippen an der Außenseite der Haube angeordnet, so dass sich der Schneidkopf an die Innenseite der Haube anlegen kann.

Ausführungsbeispiele der Erfindung werden im Folgenden anhand der Zeichnung erläutert. Es zeigen:
- Fig. 1: eine schematische Darstellung eines von einem Bediener gehaltenen Freischneiders,
- Fig. 2: eine perspektivische Explosionsdarstellung eines ersten Ausführungsbeispiels des Schneidkopfes, der Haube mit Nabe und der Abtriebswelle,
- Fig. 3: eine Schnittdarstellung des vorderen Gehäuses und eines zweiten Ausführungsbeispiels der erfindungsgemäßen Anordnung,
- Fig. 4: eine Schnittdarstellung der Haube,
- Fig. 5: eine ausschnittsweise Detaildarstellung aus Fig. 3 nach dem Ausschnitt I
- Fig. 6: eine perspektivische Darstellung der Haube,
- Fig. 7: eine Seitenansicht eines Ausführungsbeispiels der erfindungsgemäßen Anordnung,
- Fig. 8: eine Schnittdarstellung der erfindungsgemäßen Anordnung aus Fig. 7,
- Fig. 9: eine Ausschnittsweise Darstellung eines Arbeitsgerätes mit Schaft und erfindungsgemäßer Anordnung.

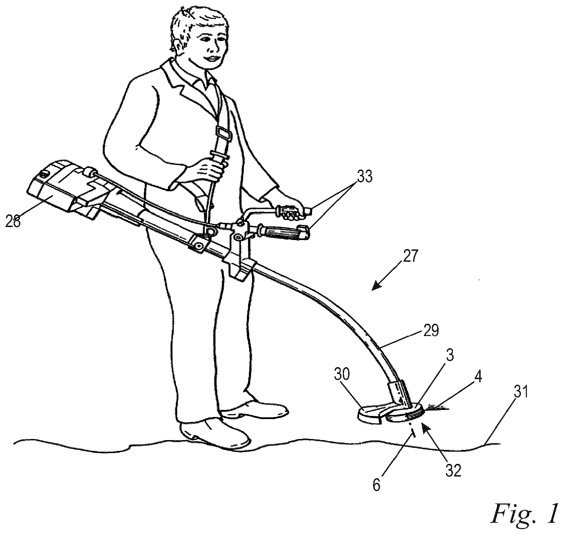

Fig. 1 zeigt schematisch ein tragbares Arbeitsgerät, welches im Ausführungsbeispiel als Freischneider ausgeführt ist. Auch andere Ausführungen des tragbaren Arbeitsgerätes 27 können zweckmäßig sein. Das tragbare Arbeitsgerät 27 wird von einem Bediener gehalten. Das Arbeitsgerät 27 besitzt ein hinteres Ende mit einem hinteren Gehäuse 28, und ein vorderes Ende mit einem vorderen Gehäuse 2, aus dem eine Abtriebswelle 5 ragt. Ein Schaft 29 verbindet das hintere und das vordere Ende. Am Schaft 29 sind Handgriffe 33 zum Führen des Arbeitsgerätes 26 angeordnet. An das vordere Ende des Arbeitsgerätes 26 schließt sich ein Schneidkopf 3 an. Der Schneidkopf 3 ist an der Abtriebswelle 5 befestigt und wird rotierend um eine Drehachse 6 von einem nicht gezeigten Antriebsmotor angetrieben. Der Antriebsmotor ist insbesondere ein Elektromotor, der im vorderen Gehäuse 2 angeordnet ist. Vorteilhaft befindet sich im vorderen Gehäuse 2 auch ein Getriebe. Es kann jedoch auch eine Anordnung zweckmäßig sein, bei der der Antriebsmotor im hinteren Gehäuse 28 angeordnet ist und im Schaft 29 eine Antriebswelle 5 verläuft. Es kann auch vorgesehen sein, dass die Antriebswelle in die Abtriebswelle 5 übergeht, demnach kein Getriebe zwischengeschaltet ist. Der Schneidkopf 3 ist an der im Betrieb dem Bediener zugewandten Seite von einer Schutzhaube 30 abgedeckt. Der Schneidkopf 3 besitzt mindestens ein Schneidwerkzeug 4, das zum Schneiden von Schnittgut wie Gras, Gestrüpp oder dgl. dient. Am Schneidkopf 3 ist eine im Betrieb dem Boden 31 zugewandte Unterseite 32 ausgebildet, die an der dem Schaft 29 abgewandten Seite des Schneidkopfes 3 angeordnet ist. Die vom Bediener zwingend zu tragende Schutzkleidung für den Betrieb eines Arbeitsgerätes 27 ist in der vereinfachten Darstellung der Fig. 1 nicht gezeigt.

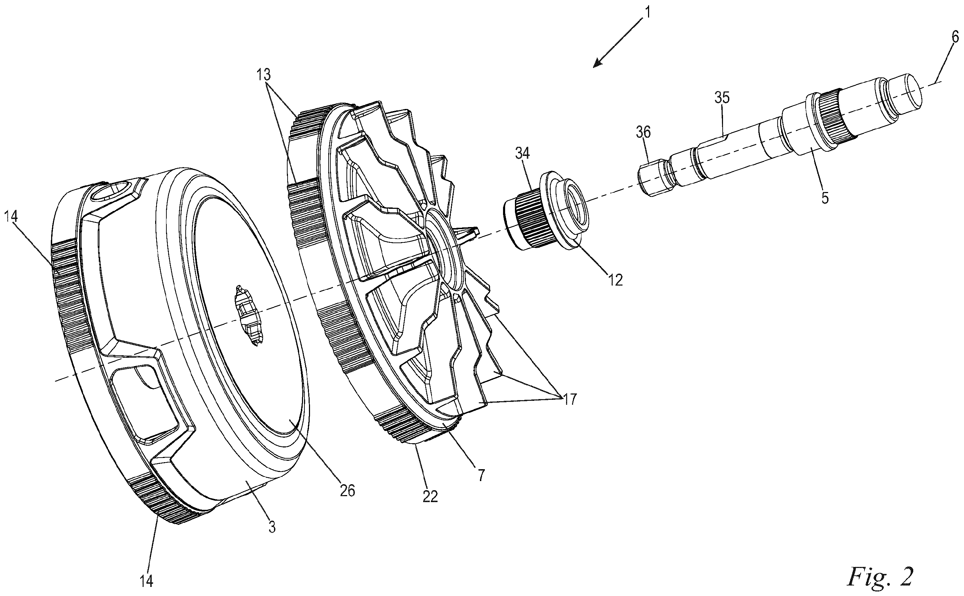

In Fig. 2 ist eine Explosionsdarstellung eines ersten Ausführungsbeispiels der erfindungsgemäßen Anordnung gezeigt. Die Anordnung 1 zur Befestigung eines Schneidkopfes an einer Abtriebswelle eines Arbeitsgerätes umfasst eine Abtriebswelle 5, eine Haube 7 mit einer Nabe 12 und einen Schneidkopf 3.

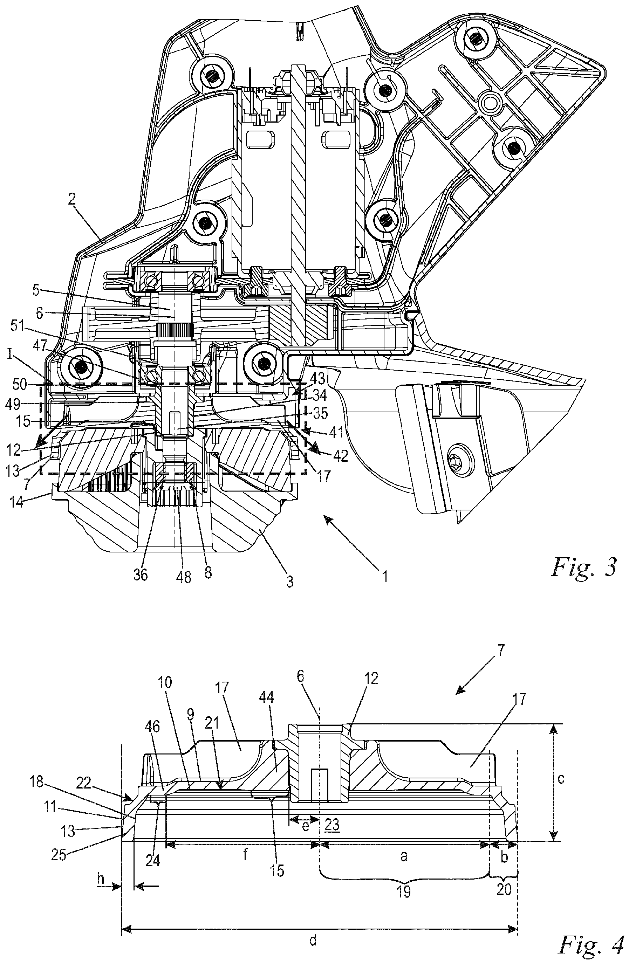

Wie in Fig. 2 gezeigt, weist die Abtriebswelle 5 einen Zweiflach 35 auf. In montiertem Zustand der Anordnung 1 ist die Nabe 12 der Haube 7 auf die Abtriebswelle 5 aufgeschoben und mittels des Zweiflachs 35 formschlüssig gegen Verdrehung um die Drehachse 6 auf der Abtriebswelle 5 gehalten. Es können auch andere Verbindungen zwischen der Nabe 12 und der Abtriebswelle 5 zweckmäßig sein, die zu einer drehfesten Verbindung zwischen der Haube 7 und der Abtriebswelle 5 führen. Die Verbindung kann zweckmäßig auch als reibkraftschlüssige oder als stoffschlüssige Verbindung ausgebildet sein. Beispiele für eine entsprechende Verbindung sind Klebung, Pressung, Passfeder-Verbindung, Verbindung mittels Madenschraube. Die Nabe 12 weist eine Verzahnung 34 auf, auf welcher die Haube 7 angeordnet ist. Die Haube 7 ist mit ihrer Nabe 12 mittels der Verzahnung 34 formschlüssig in Umfangsrichtung der Drehachse 6 verbunden und drehsicher auf der Abtriebswelle 5 gehalten. Es können auch andere Verbindungen zwischen der Nabe 12 und der Haube 7, wie zum Beispiel reibkraftschlüssige oder stoffschlüssige Verbindungen, zweckmäßig sein. Die Abtriebswelle 5 weist an ihrem dem Boden 31 zugewandten Ende (Fig. 1) ein Gewinde 36 auf. Der Schneidkopf 3 ist über ein im Schneidkopf 3 drehsicher befestigtes Schraubelement 8 (Fig. 3) auf das Gewinde 36 der Abtriebswelle 5 geschraubt. Im Ausführungsbeispiel ist ein Schraubelement 8 im Schneidkopf 3 eingesetzt, das samt Schneidkopf 3 auf das Gewinde 36 der Abtriebswelle 5 aufgedreht ist. Das Schraubelement 8 ist im Ausführungsbeispiel als Schraubmutter ausgebildet. Der Schneidkopf 3, die Haube 7 mit ihrer Nabe 12 sowie die Abtriebswelle 5 sind koaxial zur Drehachse 6 angeordnet. Zudem weist die Haube 7 an ihrer Außenseite 22 erste Griffflächen 13 und Rippen 17 auf. Der Schneidkopf 3 weist an seiner Außenseite 26 zweite Griffflächen 14 auf.

Wie in Fig. 3 zu erkennen, ist der radiale Zugang zur Abtriebswelle 5 sowohl bei der Montage als auch bei der Demontage des Schneidkopfes versperrt. Es ist dem Bediener nicht möglich, die Abtriebswelle unmittelbar von Hand festzuhalten, um ihr Mitdrehen aufgrund der Schraubbewegung zu unterbinden. Daher ergeben sich nachfolgende Schritte zur Montage und Demontage des Schneidkopfes 3:

Zur Montage des Schneidkopfes 3 auf die Abtriebswelle 5 ist der Schneidkopf 3 mittels des Schraubelementes 8 auf das Gewinde 36 der Abtriebswelle 5 zu schrauben. Damit die Abtriebswelle 5 sich bei der Montage des Schneidkopfes 3 nicht mitdreht, ist die Abtriebswelle 5 über die Haube 7 an den Griffflächen 13 festzuhalten. Dabei wird die Haltekraft des Bedieners von der Grifffläche 13 über die Haube 7 auf die Nabe 12 zur Abtriebswelle 5 übertragen. Die Abtriebswelle 5 kann somit über die Griffflächen 13 an der Haube 7 festgehalten werden, während der Schneidkopf 3 an den zweiten Griffflächen 14 gehalten und auf das Gewinde 36 der Abtriebswelle 5 geschraubt wird. Der Schneidkopf 3 kommt dabei mit seiner Außenseite 26 an der Haube 7 in Richtung der Drehachse 6 zur Anlage. Die Haube 7 wird über ihre Nabe 12 an einem auf der Abtriebswelle 5 befestigten Stützlager 47 (Fig. 3) in Richtung der Drehachse 6 abgestützt. Durch das Festhalten der Abtriebswelle 5 über die Haube 7 kann der Schneidkopf 3 mit ausreichend hohem Anzugsmoment auf die Abtriebswelle 5 von Hand geschraubt werden.

Zur Demontage des Schneidkopfes 3 kann der Bediener mit seiner einen Hand die Haube 7 an den ersten Griffflächen 13 festhalten und somit die Abtriebswelle 5 in Drehrichtung blockieren. Zugleich kann der Bediener mit seiner anderen Hand den Schneidkopf 3 an seinen zweiten Griffflächen 14 greifen und den Schneidkopf von dem Gewinde 36 der Abtriebswelle 5 schrauben ohne dabei die Abtriebswelle mitzudrehen. So kann eine werkzeuglose Montage bzw. Demontage des Werkzeugkopfes 3 von Hand erfolgen, ohne dass die Abtriebswelle für den Bediener unmittelbar zugänglich ist.

In Fig. 3 ist das zweite Ausführungsbeispiel der erfindungsgemäßen Anordnung aus Schneidkopf 3, Haube 7 und der Abtriebswelle 5 montiert im vorderen Gehäuse 2 eines erfindungsmäßen Arbeitsgerätes gezeigt. Im vorderen Gehäuse 2 ist die Abtriebswelle 5 drehend gelagert. Im vorderen Gehäuse 2 kann ein Getriebe und/oder ein Antriebsmotor angeordnet sein, so dass das vordere Gehäuse 2 zweckmäßig als Getriebegehäuse oder als Motorgehäuse ausgebildet ist.

Wie in Fig. 3 gezeigt, umfasst der Schneidkopf 3 das Schraubelement 8, welches drehfest an dem Schneidkopf 3 befestigt ist. Das Schraubelement 8 ist im Ausführungsbeispiel mittels einer Zahnscheibe 48 gegen axiales Lösen vom Schneidkopf 3 gesichert. Das Schraubelement 8 kann auch ein unlösbar im Schneidkopf 3 aufgenommenes Insert sein. Der Schneidkopf 3 ist über das Schraubelement 8 auf dem Gewinde 36 der Abtriebswelle 5 aufgeschraubt. Der Schneidkopf 3 wird über eine Anlagefläche 15 der Haube 7 axial abgestützt. Über die Anlagefläche 15 wird im Wesentlichen die Spannkraft zwischen dem Schneidkopf 3 und der Haube 7 übertragen. Die Haube 7 ist auf der Nabe 12 angeordnet und stützt sich gegen diese in Richtung der Drehachse 6 in einer ersten Kontaktfläche 49 ab. Die Nabe 12 ist wiederum gegen ein auf der Abtriebswelle 5 angeordnetes Stützlager 47 gespannt, das in Richtung der Drehachse 6 an einer Wellenschulter 51 anschlägt. Die Nabe 12 kontaktiert das Stützlager 47 in dessen Innenlagerschale in einer zweiten Kontaktfläche 50. Demnach ist ausgehend von dem Schraubelement 8 des Schneidkopfes 3 in Richtung der Drehachse 6 über die Haube 7 und der Nabe 12 bis hin zur Abtriebswelle 5 ein geschlossener Kraftfluss gewährleistet.

Wie in Fig. 3 gezeigt, erfolgt die Übertragung der an der Haube 7 wirkenden Momente auf die Abtriebswelle 5 über die Nabe 12. Die Verzahnung 34 der Nabe 12 verbindet die Nabe 12 mit der Haube 7 formschlüssig in Umfangsrichtung der Drehachse 6. Die Nabe 12 ist auf der Abtriebswelle 5 durch den auf der Abtrieswelle 5 ausgebildeten Zweiflach formschlüssig in Umfangsrichtung der Drehachse 6 gehalten.

Das vordere Gehäuse 2 überragt mit seiner Umfangswand, wie in Fig. 3 gezeigt, die Haube 7, insbesondere die Rippen 17 der Haube 7, in Richtung der Drehachse 6. Zudem ragt die Haube 7 jedoch mindestens teilweise in Richtung der Drehachse 6 aus dem vorderen Gehäuse 2 mit ihren ersten Griffflächen 13 heraus. Die Griffflächen 13 sind somit für den Bediener zugänglich. Ferner begrenzen das vordere Gehäuse 2 und die Haube 7 einen Ringspalt 41. Durch die Rippen 17 der Haube 7 wird im Betrieb des Arbeitsgerätes 27 ein Luftstrom 42 erzeugt, welcher aus einem vom vorderen Gehäuse 2 eingeschlossenen Getriebeinnenraum 43 über den Ringspalt 41 nach außen in die Umgebung bläst. Demnach bildet der Ringspalt 41 eine Spaltdichtung, welche das Eindringen von Verschmutzungen in den Getriebeinnenraum 43 verhindert.

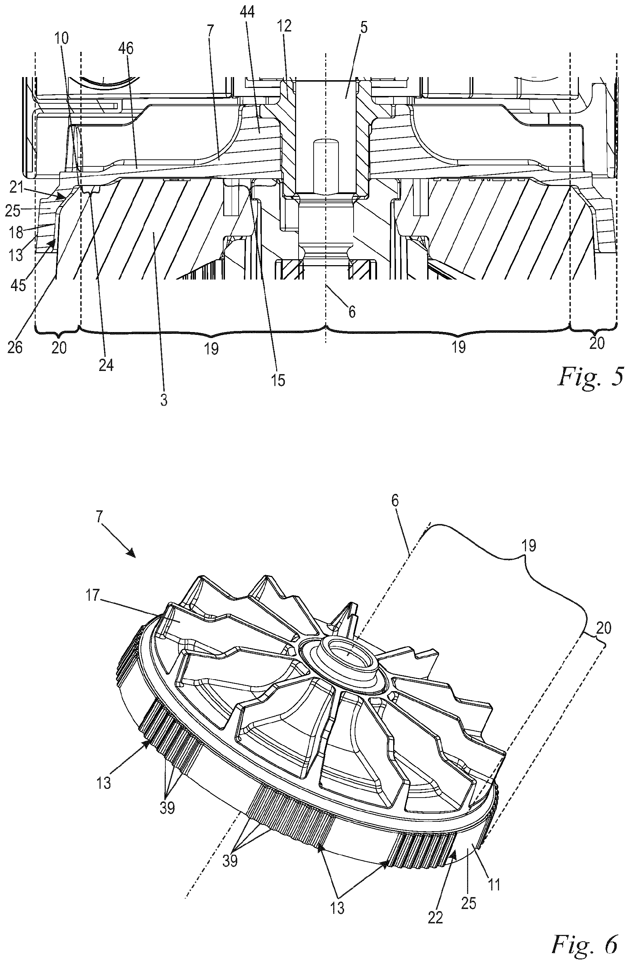

In Fig. 4 ist die Haube 7 mit ihrer Nabe 12 in einer Schnittdarstellung gezeigt. Die Haube 7 ist im Ausführungsbeispiel topfförmig ausgebildet. Die Form der Haube 7 folgt vorteilhaft der Außenkontur des von ihr abgedeckten Bereichs des Schneidkopfes 3. Der Schneidkopf 3 hat im Ausführungsbeispiel eine im Wesentlichen zylindrische Gestalt. Die Haube 7 umfasst einen von der Drehachse 6 sich in radialer Richtung erstreckenden Haubenboden 46 und eine an den Haubenboden 46 anschließende Haubenwand 25. Die Haubenwand 25 erstreckt sich in Richtung der Drehachse 6. Die Haube 7 weist eine dem Schneidkopf 3 zugewandte Innenseite 21 und eine dem Schneidkopf 3 abgewandte Außenseite 22 auf (Fig. 5). Die Innenseite 21 begrenzt einen Innenraum 23 der Haube 7. Im Ausführungsbeispiel unterteilt sich die Innenseite 21 in eine Unterseite 10 am Haubenboden 46 und in eine Umfangsinnenseite 18 an der Haubenwand 25. Die Außenseite 22 der Haube 7 unterteilt sich in eine Oberseite 9 am Haubenboden 46 und in eine Umfangsaußenseite 11 an der Haubenwand 25. Die Haube 7 besitzt einen auf die Umfangsaußenseite 11 bezogenen Außendurchmesser d. Im Ausführungsbeispiel nimmt der Außendurchmesser d ausgehend vom Haubenboden 46 in Richtung der Drehachse 6 geringfügig zu. Dennoch weist die Haubenwand 46 im Ausführungsbeispiel einen im Wesentlichen zylinderförmigen Konturverlauf auf. Der Schneidkopf 3 kann beispielsweise auch eine kugelige Gestalt besitzen. Die topfförmige Haube 7 folgt vorteilhaft auch dort der Außenkontur des von ihr abgedeckten Bereiches des Schneidkopfes 3, so dass Haubenboden 46 und Haubenwand 25 einen gekrümmten Verlauf aufweisen. Die Haube 7 weist an der Haubenwand 46 eine Dicke h auf, die dem Abstand zwischen der Umfangsaußenseite 11 und der Umfangsinnenseite 18 entspricht. Die Dicke h der Haubenwand 46 entspricht bevorzugt weniger als 5% des maximalen Außendurchmessers d der Haube 7.

Wie in Fig. 4 gezeigt, unterteilt sich die Haube 7 ausgehend von der Drehachse 6 in radialer Richtung in einen Innenbereich 19 und einen an den Innenbereich 19 anschließenden Außenbereich 20. Der Innenbereich 19 weist eine Breite a auf, die dem radial zur Drehachse 6 gemessenen Abstand zwischen Außenbereich 20 und der Drehachse 6 entspricht. Der Außenbereich 20 weist eine Breite b auf, die dem radial zur Drehachse 6 gemessenen Abstand zwischen der Umfangsaußenseite 11 und dem Innenbereich 19 entspricht. Im Ausführungsbeispiel entspricht die Breite a des Innenbereichs mindestens dem 3fachen, insbesondere mindestens dem 5fachen, bevorzugt in etwa dem 6fachen der Breite b des Außenbereichs 20. Der Innenbereich 19 erstreckt sich vorzugsweise von der Drehachse 6 bis hin zur Umfangsinnenseite 18 der Haubenwand 25. Der Außenbereich 20 erstreckt sich bevorzugt von der Umfangsinnenseite 18 bis zur Umfangsaußenseite 11 der Haubenwand 25.

Wie in Fig. 4 gezeigt, ist an der Innenseite 21 der Haube 7 die Anlagefläche 15 ausgebildet. Im Ausführungsbeispiel ist die Anlagefläche 15 auf der Unterseite 10 des Haubenbodens 46 benachbart zur Nabe 12 ausgebildet und besitzt einen Abstand e zur Drehachse 6. Die Anlagefläche 15 ist insbesondere eine Ringfläche. Die Anlagefläche 15 verläuft senkrecht zur Drehachse 6, kann jedoch in einem alternativen Ausführungsbeispiel auch schräg zur Drehachse 6 ausgerichtet sein. Die Anlagefläche 15 ist in etwa auf halber Länge c der Haube 7 angeordnet. Die Länge c der Haube 7 ist in Richtung der Drehachse 6 gemessen. Ferner ist an der Innenseite 21 der Haube 7 eine Dichtfläche 24 ausgebildet. Die Dichtfläche 24 ist auf der Unterseite 10 des Haubenbodens 46 benachbart zur Haubenwand 25 ausgebildet. Die Dichtfläche 24 ist insbesondere eine Ringfläche. Die Dichtfläche 24 ist im Ausführungsbeispiel senkrecht zur Drehachse 6 angeordnet. In einem alternativen Ausführungsbeispiel kann die Dichtfläche 24 auch schräg oder parallel zur Drehachse 6 ausgerichtet sein. Die Dichtfläche 24 besitzt einen Abstand f zur Drehachse 6, welcher mindestens dem 4fachen, insbesondere in etwa dem 5fachen Abstand e zwischen der Anlagefläche 15 und der Drehachse 6 entspricht. Zudem entspricht der Abstand f der Dichtfläche 24 mindestens einem Viertel, insbesondere mindestens einem Drittel des Außendurchmessers d der Haube 7.

Wie in Fig. 5 gezeigt, dient die Anlagefläche 15 der Haube 7 als Kontaktfläche für den Schneidkopf 3 zur Verspannung des Schneidkopfes 3 mit der Haube 7. Der Schneidkopf 3 ist flächig gegen die Anlagefläche 15 der Haube 7 gespannt. Um die Spannkräfte aufnehmen zu können, ist an der Anlagefläche 15 der Haube 7 eine Längung 44 ausgebildet, welche sich in Richtung der Drehachse 6 erstreckt. Die Haube 7 ist im Bereich der Längung vorzugsweise durch Verrippungen ausgebildet. Dadurch wird gewährleistet, dass die Haube 7 im Bereich des Hauptkraftflusses zwischen Schneidkopf 3 und Haube 7 eine ausreichend hohe Festigkeit aufweist. Zudem kontaktieren sich die Außenseite 26 des Schneidkopfes 3 mit der Innenseite 21 der Haube 7 an der Dichtfläche 24 der Haube 7 und bilden somit eine Dichtung gegen Schmutz. Da die Dichtfläche 24 benachbart zur Haubenwand 25 und somit radial außerhalb der Anlagefläche 15 angeordnet ist, wird eine Verschmutzung der Anlagefläche 15 zwischen Haube 7 und Schneidkopf 3 vermieden. Sowohl die Dichtfläche 24 als auch die Anlagefläche 15 sind im Innenbereich 19 angeordnet.

Wie in Fig. 5 gezeigt, kontaktiert die Haube 7 an ihrer Innenseite 21 den Schneidkopf 3 im Außenbereich 20 der Haube 7 nicht. Die Haube 7 und der Schneidkopf 3 besitzen im Außenbereich 20 der Haube 7 ein in radialer Richtung der Drehachse 6 verlaufendes Spiel 45. Das Spiel 45 ist durch einen Abstand zwischen der Umfangsinnenseite 18 der Haubenwand 25 und der Außenseite 26 des Schneidkopfes 3 gebildet. Im Ausführungsbeispiel erstreckt sich das Spiel in Richtung der Drehachse 6 und verläuft entlang der gesamten Haubenwand 25, insbesondere entlang der ersten Grifffläche 13, bis hin zur Unterseite 10 des Haubenbodens 46. Dadurch wird vermieden, dass bei der Montage bzw. Demontage des Schneidkopfes 3 die Haube 7 im Bereich der ersten Grifffläche 13 an den Schneidkopf 3 gedrückt wird und somit das Lösen oder das Befestigen des Schneidkopfes 3 beeinträchtigt wird.

In Fig. 6 ist die Haube 7 in einer perspektivischen Draufsicht dargestellt. An der Außenseite 22 der Haube 7 sind die Rippen 17 ausgebildet. Die Rippen 17 verlaufen in radialer Richtung der Drehachse 6 und erstrecken sich dabei in Richtung der Drehachse 6. Im Ausführungsbeispiel sind die Rippen 17 lediglich auf der Oberseite 9 des Haubenbodens 46 ausgebildet. Die Rippen 17 verlaufen an der Oberseite 9 durch den Innenbereich 19 und ragen in den Außenbereich 20 hinein. Zweckmäßig können die Rippen 17 lediglich im Innenbereich 19 der Haube 7 ausgebildet sein. In einem bevorzugten Ausführungsbeispiel können die Rippen 17 zweckmäßig von der Oberseite 9 bis hin zur Umfangsaußenseite 11 der Haubenwand 25 verlaufen. In einem alternativen Ausführungsbeispiel können die Rippen 17 auch zweckmäßig auf der Innenseite 21 der Haube 7 ausgebildet sein. Die Rippen 17 sind insbesondere sternenförmig um die Drehachse 6 angeordnet. Die Rippen 17 können auch bogenförmig zur Drehachse 6 angeordnet sein. Die Dichtfläche 24 liegt ringförmig um die Drehachse 6. Im Ausführungsbeispiel sind die Rippen 17 und die Dichtfläche 24 auf gegenüberliegenden Seiten der Haube 7 angeordnet. Die Rippen 17 dienen zur Versteifung der Haube 7, so dass beim Greifen der Haube 7 eine Verformung der Haube 7 vermieden wird. Die Rippen 17 der Haube 7 erzeugen bei Drehung der Haube 7 einen Luftstrom, so dass die Haube 7 beispielsweise als Lüfterrad oder als Gebläserad eingesetzt werden kann. Im Ausführungsbeispiel ist die Haube 7 als ein Lüfterrad ausgebildet.

Wie in Fig. 6 gezeigt, sind an der Haube 7 erste Griffflächen 13 ausgebildet. Die ersten Griffflächen 13 sind im Außenbereich 20 an der Außenseite 22 der Haube 7 angeordnet. Im Ausführungsbeispiel sind die ersten Griffflächen 13 an der Umfangsaußenseite 11 der Haubenwand 25 ausgebildet. Im Ausführungsbeispiel sind die ersten Griffflächen 13 der Haube 7 in Umfangsrichtung der Drehachse 6 an der Umfangsaußenseite 11 der Haube 7 gleichmäßig voneinander beabstandet. Es kann auch eine ungleichmäßige Anordnung der ersten Griffflächen 13 oder eine einzige erste Grifffläche 13 entlang der gesamten Umfangsaußenseite 11 zweckmäßig sein. Die erste Grifffläche 13 weist eine Riffelstruktur auf, welche aus einzelnen Riffelelementen 39 ausgebildet ist. Die Riffelelemente 39 verlaufen in etwa in Richtung der Drehachse 6. Dadurch ergibt sich beim Festhalten der Haube 7 an den ersten Griffflächen 13 eine besonders gute Kraftübertragung in Umfangsrichtung der Drehachse 6.

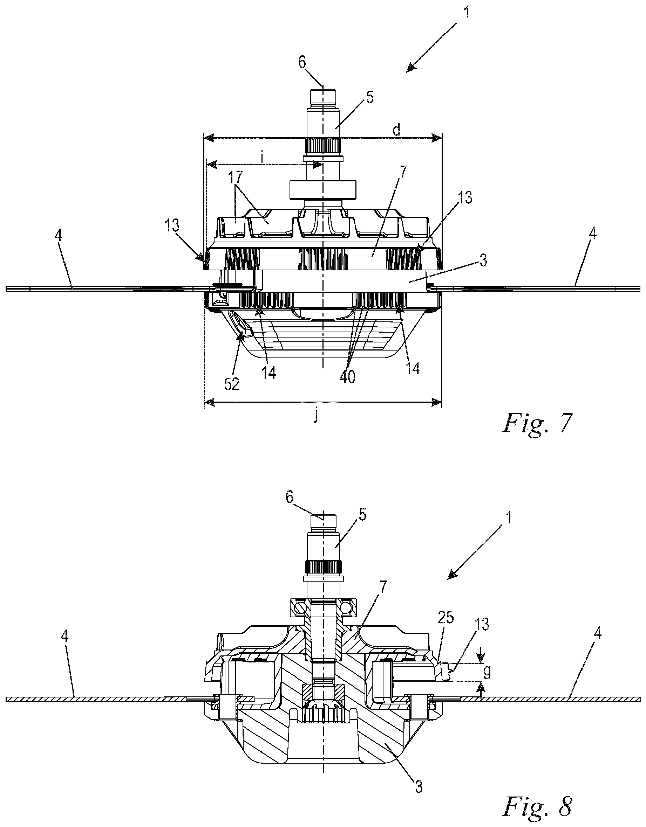

Wie in Fig. 7 gezeigt, sind an der Außenseite 26 des Schneidkopfs 3 zweite Griffflächen 14 ausgebildet. Die zweiten Griffflächen 14 sind an der Außenseite 26 des Schneidkopfes 3 in Umfangsrichtung der Drehachse 6 gleichmäßig voneinander beabstandet. Es kann auch zweckmäßig sein, eine ungleichmäßige Anordnung der zweiten Griffflächen 14 oder lediglich eine einzige zweite Grifffläche 14 an der Außenseite 26 des Schneidkopfes 3 vorzusehen. Die zweite Grifffläche 14 des Schneidkopfes 3 weist in etwa in Richtung der Drehachse 6 verlaufende Riffelelemente 40 auf, die eine Kraftübertragung beim Halten des Schneidkopfes 3 an den zweiten Griffflächen 14 begünstigen. Sowohl die erste Grifffläche 13 der Haube 7 als auch die zweite Grifffläche 14 des Schneidkopfes 3 können zweckmäßig andere Griffstrukturen aufweisen. Sowohl die ersten Griffflächen 13 der Haube 7 als auch die zweiten Griffflächen 14 des Schneidkopfes 3 sind für den Bediener frei zugänglich.

Wie in Fig. 7 gezeigt, besitzt die Grifffläche 13 einen Abstand i zur Drehachse 6, welcher mindestens 30%, insbesondere mindestens 35% des maximalen Außendurchmessers j des Schneidkopfes 3 entspricht. Der maximale Außendurchmesser d der Haube 7 entspricht höchstens 120%, insbesondere höchstens 110% des maximalen Außendurchmessers j des Schneidkopfes 3.

Wie in Fig. 8 gezeigt, besitzt die erste Grifffläche 13 eine in Richtung der Drehachse 6 gemessene Länge g. Der Schneidkopf 3 ist im Innenraum 23 der Haube 7 angeordnet, so dass die Haube 7 den Schneidkopf 3 zumindest teilweise umhüllt. Dabei ragt die Haube 7 in Richtung der Drehachse 6 soweit über den Schneidkopf 3, dass die Haube 7 den Schneidkopf 3 mit der gesamten Länge g der ersten Grifffläche 13 überlappt.

Wie in den Fig. 7 und 8 gezeigt, sind an dem Schneidkopf 3 zwei Schneidwerkzeuge 4 montiert. Es kann zweckmäßig sein, lediglich ein Schneidwerkzeug 4 oder auch mehrere Schneidwerkzeuge 4 an dem Schneidkopf 3 zu befestigen.

Im Ausführungsbeispiel sind die Schneidwerkzeuge 4 als Schneidmesser ausgebildet. Zudem sind am Schneidkopf Befestigungsvorrichtungen 52 zur Befestigung eines Schneidfadens vorgesehen. So können im Betrieb des Schneidkopfes 3 als Schneidwerkzeug 4 Schneidmesser und/oder Schneidfäden eingesetzt werden.

Die Schneidköpfe 3 der Ausführungsbeispiele in den Figuren 2 und 3 haben gemeinsam, dass sie jeweils als Einheit von der Abtriebswelle 5 abgeschraubt werden. Der Schneidkopf 3 kann zwar aus mehreren Teilen bestehen, diese werden jedoch nicht relativ zueinander bewegt, um den Schneidkopf 3 von der Abtriebswelle 5 zu demontieren.

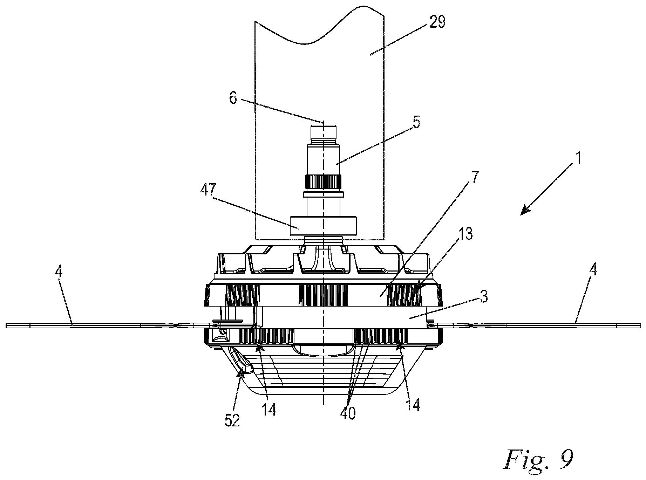

In Fig. 9 ist eine ausschnittsweise Darstellung eines Ausführungsbeispiels eines Arbeitsgerätes 27 gezeigt, bei welcher die erfindungsgemäße Anordnung 1 direkt an dem Schaft 29 angeordnet ist. Demnach ist der Schneidkopf 3 nicht über ein vorderes Gehäuse 2, sondern unmittelbar an dem Schaft 29 angebunden. Die Abtriebswelle 5 ist im Schaft 29 über das Stützlager 47 gelagert. Die nicht dargestellte Antriebswelle geht direkt in die Abtriebswelle 5 über. Auf der Abtriebswelle 5 sind erfindungsgemäß die Haube 7 und der Schneidkopf 3 angeordnet.

## Patentansprüche

1. Anordnung, wobei die Anordnung (1) eine Abtriebswelle (5), einen Schneidkopf (3) und zumindest ein am Schneidkopf (3) angeordnetes Schneidwerkzeug (4) umfasst, wobei die Anordnung (1) zusätzlich eine Haube (7) umfasst, wobei der Schneidkopf (3) und die Haube (7) im Betrieb um eine Drehachse (6) drehend angetrieben sind, wobei die Haube (7) sich in radialer Richtung ausgehend von der Drehachse (6) in einen Innenbereich (19) und einen an den Innenbereich (19) anschließenden Außenbereich (20) unterteilt, wobei eine radial zur Drehachse (6) gemessene Breite (a) des Innenbereichs (19) mindestens dem 3fachen einer radial zur Drehachse (6) gemessenen Breite (b) des Außenbereichs (20) entspricht, und wobei die Haube (7) im Innenbereich (19) Rippen (17) und im Außenbereich (20) eine erste Grifffläche (13) aufweist,
wobei der Schneidkopf (3) mittels eines an dem Schneidkopf (3) drehfest gehaltenem Schraubelementes (8) auf der Abtriebswelle (5) montiert ist, **dadurch gekennzeichnet, dass** die Haube (7) unmittelbar formschlüssig, geklebt oder gepresst auf der Abtriebswelle (5) drehfest gehalten ist.

2. Anordnung nach Anspruch 1,
**dadurch gekennzeichnet, dass** die Haube (7) topfförmig ausgebildet ist.

3. Anordnung nach Anspruch 1 oder 2,
**dadurch gekennzeichnet, dass** die Haube (7) eine Innenseite (21) aufweist, wobei die Innenseite (21) einen Innenraum (23) begrenzt, und der Schneidkopf (3) mindestens teilweise in dem Innenraum (23) aufgenommen ist.

4. Anordnung nach Anspruch 3,
**dadurch gekennzeichnet, dass** die Haube (7) eine der Innenseite (21) gegenüberliegende Außenseite (22) aufweist und die Rippen (17) lediglich an der Außenseite (22) der Haube (7) ausgebildet sind.

5. Anordnung nach Anspruch 3 oder 4,
**dadurch gekennzeichnet, dass** die Haube (7) an ihrer Innenseite (21) eine Anlagefläche (15) aufweist, über welche die Haube (7) auf der Abtriebswelle (5) verspannt ist.

6. Anordnung nach Anspruch 5,
**dadurch gekennzeichnet, dass** der Schneidkopf (3) flächig gegen die Anlagefläche (15) der Haube (7) gespannt ist.

7. Anordnung nach Anspruch 5 oder 6,
**dadurch gekennzeichnet, dass** die Haube (7) eine in Richtung der Drehachse (6) gemessene Länge (c) aufweist und die Anlagefläche (15) etwa auf halber Länge (c) der Haube (7) angeordnet ist.

8. Anordnung nach einem der Ansprüche 3 bis 7,
**dadurch gekennzeichnet, dass** sich die Innenseite (21) der Haube (7) und der Schneidkopf (4) in einer Dichtfläche (24) dichtend kontaktieren.

9. Anordnung nach einem der Ansprüche 1 bis 8,
**dadurch gekennzeichnet, dass** die Haube (7) als Lüfterrad ausgebildet ist.

10. Anordnung nach einem der Ansprüche 1 bis 9,
**dadurch gekennzeichnet, dass** die Haube (7) eine Nabe (12) umfasst, welche drehfest an der Haube (7) angeordnet ist, wobei die Nabe (12) eine formschlüssige Verbindung zwischen der Haube (7) und der Abtriebswelle (5) herstellt.

11. Anordnung nach einem der Ansprüche 1 bis 10,
**dadurch gekennzeichnet, dass** die erste Grifffläche (13) den Schneidkopf (3) in Richtung der Drehachse (6), insbesondere in ihrer gesamten Länge (g) überlappt.

12. Anordnung nach einem der Ansprüche 1 bis 11,
**dadurch gekennzeichnet, dass** die Haube (7) entlang der ersten Grifffläche (13) ausgehend von der Drehachse (6) in radialer Richtung Spiel zum Schneidkopf (3) aufweist.

13. Anordnung nach einem der Ansprüche 1 bis 12,
**dadurch gekennzeichnet, dass** die erste Grifffläche (13) der Haube (7) und eine zweite am Schneidkopf (3) ausgebildete Grifffläche (14) frei zugänglich sind.

14. Tragbares Arbeitsgerät mit einem vorderen Gehäuse und der Anordnung (1) nach einem der Ansprüche 1 bis 13,
**dadurch gekennzeichnet, dass** die Haube (7) mit ihrem Außenbereich (20) aus dem vorderen Gehäuse (2) ragt.

15. Arbeitsgerät nach Anspruch 14,
**dadurch gekennzeichnet, dass** das vordere Gehäuse (2) die Rippen (17) der Haube (7) in Richtung der Drehachse (6) überragt.

## Claims

1. Arrangement, wherein the arrangement (1) comprises an output shaft (5), a cutting head (3) and at least one cutting tool (4) arranged on the cutting head (3), wherein the arrangement (1) additionally comprises a hood (7), wherein the cutting head (3) and the hood (7) are driven in rotation about an axis of rotation (6) during operation, wherein the hood (7) is subdivided in a radial direction, starting from the axis of rotation (6), into an inner region (19) and an outer region (20) adjoining the inner region (19), wherein a width (a), measured radially to the axis of rotation (6), of the inner region (19) corresponds to at least three times a width (b), measured radially to the axis of rotation (6), of the outer region (20), and wherein the hood (7) has ribs (17) in the inner region (19) and a first gripping surface (13) in the outer region (20),
wherein the cutting head (3) is mounted on the output shaft (5) by means of a screw element (8) held fixedly in terms of rotation on the cutting head (3), **characterized in that** the hood (7) is held directly on the output shaft (5) fixedly in terms of rotation in a form-fitting, adhesively bonded or pressed manner.

2. Arrangement according to Claim 1,
**characterized in that** the hood (7) is configured in a pot-like manner.

3. Arrangement according to Claim 1 or 2,
**characterized in that** the hood (7) has an inner side (21), wherein the inner side (21) bounds an interior (23), and the cutting head (3) is received at least partially in the interior (23).

4. Arrangement according to Claim 3,
**characterized in that** the hood (7) has an outer side (22) located on the opposite side from the inner side (21), and the ribs (17) are formed only on the outer side (22) of the hood (7).

5. Arrangement according to Claim 3 or 4,
**characterized in that** the hood (7) has, on its inner side (21), a bearing face (15) via which the hood (7) is braced on the output shaft (5).

6. Arrangement according to Claim 5,
**characterized in that** the cutting head (3) is tensioned extensively against the bearing face (15) of the hood (7).

7. Arrangement according to Claim 5 or 6,
**characterized in that** the hood (7) has a length (c) measured in the direction of the axis of rotation (6), and the bearing face (15) is arranged about half-way along the length (c) of the hood (7).

8. Arrangement according to one of Claims 3 to 7,
**characterized in that** the inner side (21) of the hood (7) and the cutting head (4) are in sealing contact at a sealing face (24).

9. Arrangement according to one of Claims 1 to 8,
**characterized in that** the hood (7) is configured as a fan wheel.

10. Arrangement according to one of Claims 1 to 9,
**characterized in that** the hood (7) has a hub (12) which is arranged fixedly in terms of rotation on the hood (7), wherein the hub (12) establishes a form-fitting connection between the hood (7) and the output shaft (5).

11. Arrangement according to one of Claims 1 to 10,
**characterized in that** the first gripping surface (13) overlaps the cutting head (3) in the direction of the axis of rotation (6), in particular along its entire length (g).

12. Arrangement according to one of Claims 1 to 11,
**characterized in that** the hood (7) exhibits play in a radial direction with respect to the cutting head (3) along the first gripping surface (13) starting from the axis of rotation (6).

13. Arrangement according to one of Claims 1 to 12,
**characterized in that** the first gripping surface (13) of the hood (7) and a second gripping surface (14) formed on the cutting head (3) are freely accessible.

14. Portable work apparatus having a front housing and the arrangement (1) according to one of Claims 1 to 13,
**characterized in that** the hood (7) projects with its outer region (20) out of the front housing (2).

15. Work apparatus according to Claim 14,
**characterized in that** the front housing (2) projects beyond the ribs (17) of the hood (7) in the direction of the axis of rotation (6).

## Revendications

1. Ensemble, l'ensemble (1) comportant un arbre de sortie (5), une tête de coupe (3) et au moins un outil de coupe (4) disposé sur la tête de coupe (3), l'ensemble (1) comportant en outre un capot (7), la tête de coupe (3) et le capot (7) étant entraînés en rotation autour d'un axe de rotation (6) lors du fonctionnement, le capot (7) se subdivisant dans la direction radiale à partir de l'axe de rotation (6) en une région intérieure (19) et une région extérieure (20) adjacente à la région intérieure (19), une largeur (a) de la région intérieure (19) mesurée radialement par rapport à l'axe de rotation (6) correspondant au triple d'une largeur (b) de la région extérieure (20) mesurée radialement par rapport à l'axe de rotation (6), et le capot (7) comprenant des nervures (17) dans la région intérieure (19) et une première surface de préhension (13) dans la région extérieure (20),
la tête de coupe (3) étant montée sur l'arbre de sortie (5) au moyen d'un élément fileté (8) retenu de manière bloquée en rotation sur la tête de coupe (3), **caractérisé en ce que** le capot (7) est retenu de manière bloquée en rotation sur l'arbre de sortie (5) directement par complémentarité de forme, de manière collée ou de manière pressée.

2. Ensemble selon la revendication 1,
**caractérisé en ce que** le capot (7) est réalisé en forme de pot.

3. Ensemble selon la revendication 1 ou 2,
**caractérisé en ce que** le capot (7) comprend un côté intérieur (21), le côté intérieur (21) délimitant un espace intérieur (23), et la tête de coupe (3) étant reçue au moins partiellement dans l'espace intérieur (23).

4. Ensemble selon la revendication 3,
**caractérisé en ce que** le capot (7) comprend un côté extérieur (22) opposé au côté intérieur (21) et les nervures (17) sont réalisées seulement sur le côté extérieur (22) du capot (7).

5. Ensemble selon la revendication 3 ou 4,
**caractérisé en ce que** le capot (7) comprend sur son côté intérieur (21) une surface d'appui (15) par le biais de laquelle le capot (7) est serré sur l'arbre de sortie (5).

6. Ensemble selon la revendication 5,
**caractérisé en ce que** la tête de coupe (3) est serrée par sa surface contre la surface d'appui (15) du capot (7).

7. Ensemble selon la revendication 5 ou 6,
**caractérisé en ce que** le capot (7) présente une longueur (c) mesurée dans la direction de l'axe de rotation (6) et la surface d'appui (15) est disposée approximativement à mi-hauteur (c) sur le capot (7).

8. Ensemble selon l'une des revendications 3 à 7,
**caractérisé en ce que** le côté intérieur (21) du capot (7) et de la tête de coupe (4) sont en contact d'étanchéité dans une surface d'étanchéité (24).

9. Ensemble selon l'une des revendications 1 à 8,
**caractérisé en ce que** le capot (7) est réalisé sous forme de roue de ventilateur.

10. Ensemble selon l'une des revendications 1 à 9,
**caractérisé en ce que** le capot (7) comporte un moyeu (12), lequel est disposé de manière bloquée en rotation sur le capot (7), le moyeu (12) produisant une liaison par complémentarité de forme entre le capot (7) et l'arbre de sortie (5).

11. Ensemble selon l'une des revendications 1 à 10,
**caractérisé en ce que** la première surface de préhension (13) chevauche la tête de coupe (3) dans la direction de l'axe de rotation (6), en particulier dans toute la longueur (g).

12. Ensemble selon l'une des revendications 1 à 11,
**caractérisé en ce que** le capot (7) présente un jeu par rapport à la tête de coupe (3) dans la direction radiale le long de la première surface de préhension (13) à partir de l'axe de rotation (6).

13. Ensemble selon l'une des revendications 1 à 12,
**caractérisé en ce que** la première surface de préhension (13) du capot (7) et une deuxième surface de préhension (14) réalisée sur la tête de coupe (3) sont accessibles librement.

14. Appareil de travail portatif comportant un carter avant et l'ensemble (1) selon l'une des revendications 1 à 13,
**caractérisé en ce que** le capot (7) dépasse du carter avant (2) par sa région extérieure (20).

15. Appareil de travail selon la revendication 14,
**caractérisé en ce que** le carter avant (2) dépasse au-delà des nervures (17) du capot (7) dans la direction de l'axe de rotation (6).
